Europäisches Patentamt

European Patent Office

Office européen des brevets

(11) Publication number: **0 488 459 A2**

# EUROPEAN PATENT APPLICATION

(21) Application number: **91203058.2**

(22) Date of filing: **22.11.91**

(51) Int. Cl.5: **C08H 5/02**, C07G 1/00, B01J 20/24

(30) Priority: **29.11.90 IT 2224190**

(43) Date of publication of application:
**03.06.92 Bulletin 92/23**

(84) Designated Contracting States:
**AT BE CH DE DK ES FR GB GR LI LU NL SE**

(71) Applicant: **ENIRICERCHE S.p.A.**
**Corso Venezia 16**
**I-20121 Milan(IT)**

(72) Inventor: **Calemma, Vincenzo**
**Via Cesare Battisti, 15**
**I-20097 San Donato Milanese, Milan(IT)**
Inventor: **Piccolo, Vincenzo**
**Via L. Mascherpa, 9**
**I-20067 Paullo, Milan(IT)**
Inventor: **Rausa, Riccardo**
**Via Pace, 7**
**I-20097 San Donato Milanese, Milan(IT)**

(74) Representative: **Roggero, Sergio et al**
**Ing. Barzanò & Zanardo Milano S.p.A. Via**
**Borgonuovo 10**
**I-20121 Milano(IT)**

(54) **Process for producing regenerated humic acids from coal.**

(57) A process is described for producing humic acids by coal oxidation effected in the dry phase with oxygen or an oxygen-nitrogen mixture in a fluidized bed reactor using coal of up to 3 mm particle size and operating at a temperature of between 150 and 300°C at a partial oxygen feed pressure of between 0.7 and 5 ata, at a total pressure not exceeding 40 ata and for a contact time of between 30 and 600 minutes, characterised by recycling part of the exit gases from the reactor back to the reactor after cooling them to a temperature of between 50 and 100°C.

Fig.1

This invention relates to a process for producing regenerated humic acids from coal by dry-phase oxidation with oxygen or oxygen-nitrogen mixtures.

Humic acids can be used either as such or mixed with fertilizers to prepare soil fertilizing additives, this being a common use. Said acids can also be used for removing metals from water. Processes for preparing humic acids by coal oxidation are known. Said oxidation processes are generally of four types:

- oxidation with nitric acid or nitrogen oxides (as described for example in the patent GB-1283385);
- oxidation with oxygen in the aqueous phase at acid pH (as described for example in the unexamined patent application JP-70/10723);
- oxidation with oxygen in the aqueous phase at alkaline pH (as described, for example, in the publication U.S. Bur. Mines Int. Circ. No. 8234, 1963, page 74);
- oxidation with oxygen (or air) in the dry phase (as described in European Patent Appln. Public. No. 0 272 737 of the present applicant)

The first three processes have various drawbacks, as listed below.

Oxidation with nitric acid or nitrogen oxides suffers from:

- high reactant costs relative to the value of the product obtained;
- poor selectivity towards humic acid formation (humic acid/fuvic acid weight ratio not greater than 4);
- long reaction times for coal particle sizes greater than 100 $\mu$m.

Oxidation with oxygen in the aqueous phase at basic pH suffers from:

- low maximum yields (45% at most);
- high alkali consumption (coal/alkali ratio = 1.5-2.5);
- high oxygen partial pressure (20-30 ata);
- poor selectivity towards humic acid formation (humic acid/fulvic acid weight ratio between 2.5 and 3);
- 15-25% $CO_2$ development.

Oxidation with oxygen in the aqueous phase at acid pH suffers from:

- high consumption of costly chemicals;
- long reaction times.

For this latter process, of which there is little information, the selectivity and yields are not known, but they cannot be high. The fourth type of process, claimed in European Patent Appln. Publ.No. 0272 737,enables the stated drawbacks of the three aforesaid processes to be considerably reduced.

The coal oxidation in the dry phase with oxygen or oxygen-nitrogen mixtures is conducted in a fluidized bed reactor using coal with a particle size of between 100 $\mu$m and 3 mm and operating at a temperature of between 150 and 300°C, at an oxygen partial pressure of between 1.1 and 10 ata, for a contact time of between 30 and 600 minutes.

We have now modified the aforedescribed process in such a manner as to result in an improved oxygen consumption, a lower compression energy, and operating conditions which are intrinsically safe from the point of view of the flammability of the dust-air mixtures which form in the free section of the reactor.

The humic acid production process of the present invention, analogously to patent application EU 0272 737, comprises coal oxidation effected in the dry phase with oxygen or a nitrogen-oxygen mixture, in particular air, in a fluidized bed reactor using coal of up to 3 mm particle size and operating at a temperature of between 150 and 300°C at a partial oxygen feed pressure of between 0.7 and 5 ata, at a total pressure not exceeding 40 ata and for a contact time of between 30 and 600 minutes.

Compared with the aforedescribed process, said new process comprises recycling part of the exit gases from the reactor back to the reactor after cooling them to a temperature of between 50 and 100°C.

Said part of the exit gases is recycled preferably in a quantity of between 50 and 99% of the total exit gas volume.

If air is used as the oxidizing agent, said part is more preferably between 50 and 90 vol% and most preferably between 70 and 85 vol%. If oxygen is used as the oxidizing agent, said part is more preferably between 85 and 99% of the total exit gas volume.

The products obtained can then be extracted from the oxidized coal by an alkaline solution.

The original coals from which the humic acids are obtained are preferably chosen from those within the range from lignite to bituminous coals.

The following examples are provided to better illustrate the invention but without in any manner constituting a limitation thereon.

EXAMPLE 1

A trial for simulating recycling was carried out, checking that the kinetics are not influenced by the

EP 0 488 459 A2

presence of CO, $CO_2$ and $H_2O$, or by the volumetric oxygen concentration.

The comparison of the experimental results obtained from two different series of oxidation tests in a fluidized bed of Sulcis coal, the first at a pressure of 5 ata using air and the second at a pressure of 10 ata using a simulation mixture maintaining the $O_2$ partial pressure constant, shows that the conversions are practically unchanged.

The operating conditions are as follows:

Temperature = 230°C

Residence time = 3, 6, 10 hours

Particle size = 200-600 $\mu m$ (mean value 400 $\mu m$)

Pressure = 5 ata (with air), 10 ata (with gaseous simulation mixture).

The gas mixture composition was as follows:

CO = 1.57%

$CO_2$ = 3.86%

$H_2O$ = 3.50%

$O_2$ = 9.87%

$N_2$ = 81.20%

The oxidized coal was analyzed in the following manner.

Ten grams of the sample and 150 ml of 1N NaOH were fed into a flask and heated under reflux in an inert atmosphere ($N_2$) under agitation for 7 hours.

The reaction mixture was cooled and centrifuged to separate the residue.

The residue was washed once with 0.1N NaOH and then successively with water until the extracts obtained were slightly coloured. The wash waters were added to the solution obtained after centrifuging.

After drying, the residue was weighed and analyzed to determine its carbon and the percentage of organic material.

The humic acids contained in the solution were recovered by precipitation by adding $H_2SO_4$ to pH 2 and centrifuging. The solid was then dried, weighed and analyzed to determine the organic material content and the carbon percentage.

The results are given in the following table:

| Time (hours) | Pressure (ata) | Oxygen (vol%) | Carbon present in humic acids as % of that fed (on organic material basis) (%) |
|---|---|---|---|
| 3 | 10 | 9.87 | 27.4 |
| 6 | 10 | 9.87 | 32.1 |
| 10 | 10 | 9.87 | 41.7 |
| 3 | 5 | 21.00 | 29.7 |
| 6 | 5 | 21.00 | 35.2 |
| 10 | 5 | 21.00 | 43.4 |

It can be noted that the variation in the volumetric oxygen concentration only slightly influences the carbon concentration, provided the oxygen partial pressure remains unchanged.

It can also be seen that the presence of CO, $CO_2$ and $H_2O$ does not affect the carbon conversion.

EXAMPLES 2-3

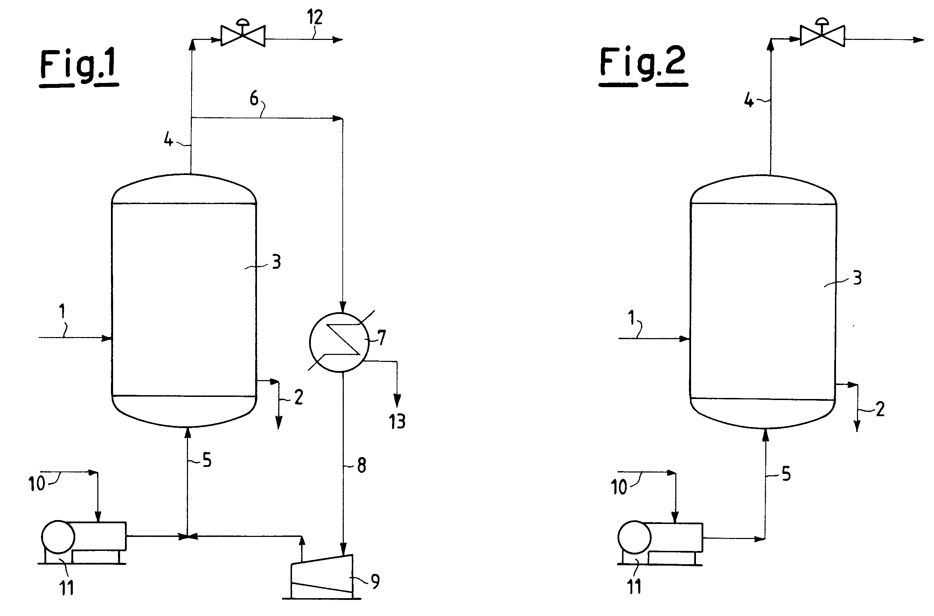

With reference to Figure 1, Sulcis coal (1) of particle size less than 1000 $\mu m$ (mean value 220 $\mu m$) is fed continuously at a rate of 4970 kg/h.

The oxidized coal (2) is discharged continuously by overflow at a rate of 4790 kg/h. The volume of the reactor (3) is such as to enable the residence time to be varied from 16 hours (Example 2) to 10 h (Example 3) (this being the ratio of the weight of solid present in the bed to the solid discharge rate).

The difference between the feed and discharge solid rates is due to the production of gaseous CO, $CO_2$ and $H_2O$ (4) during the oxidation, this being partly compensated by the oxygen gain of the oxidized coal.

The solid is kept fluidized within the reactor by a gaseous stream (5) (40,000 $Nm^3$/h) fed at 70°C, with the result that taking into account the heat evolved by the oxidation reaction, the mean temperature within the reactor is 230°C. The operating pressure is 10 ata.

EXAMPLE 2

3

As shown in Figure 1, a part (stream 6) of the gaseous stream (4) (74% of the total) is recycled (5) to the reactor, together with the air (10) compressed in (11), after being cooled in the condenser (7) to a temperature of 70°C (stream 8) and after separating the condensate (13) compressed in (9). The stream (12) is the part of the gaseous stream (4) which is not recycled.

The solid residence time is 16 hours.

Table 1 shows the main data regarding the gaseous and solid streams.

It can be seen that this method results in:
- an oxygen concentration entering the reactor of not greater than 10%. The process therefore operates outside the explosive limits of the coal dust/oxygen mixture;
- an oxygen conversion of 36%;
- a total power consumption for recompressing the recycled stream and compressing the make-up air of 900 kW.

EXAMPLE 3 - comparative

With reference to Figure 2 the same test as Example 2 is carried out but without recycling part of the exit gases.

The reference numerals of Figure 2 have the same meaning as those of Figure 1.

The solid residence time is 10 hours.

Table 2 shows the main data regarding the gaseous and solid streams.

It can be seen that:
- the oxygen concentration entering the reactor is 21%. This does not allow the process to operate outside the explosive limits of the coal dust/oxygen mixture;
- the oxygen conversion is 3.6%.
- the total power consumption for air compression is 4,000 kW.

TABLE 1

| Stream No. | 10 | 1 | 12 | 2 | 6 | 8 | 5 | 13 |
|---|---|---|---|---|---|---|---|---|
| Coal rate kg/h | | 4970 | | | | | | |
| Oxidized coal rate kg/h | | | | 4790 | | | | |
| Condensate kg/h | | | | | | | | 90 |
| Volumetric flow $Nm^3/h$ | 6650 | | 11540 | | 33490 | 33400 | 40050 | |
| Oxygen conc. vol% | 21 | | 8 | | 8 | 8 | 10 | |
| Temperature °C | 25 | | 230 | | 230 | 70 | 70 | |
| Pressure ata | 1.00 | | 9.95 | | 9.95 | 9.75 | 11 | |

TABLE 2

| Stream No. | 10 | 1 | 4 | 2 |
|---|---|---|---|---|
| Coal rate kg/h | | 5530 | | |
| Oxidized coal rate kg/h | | | | 4790 |
| Volumetric flow $Nm^3/h$ | 40050 | | 45030 | |
| Oxygen conc. vol% | 21 | | 18 | |
| Temperature °C | 25 | | 230 | |
| Pressure ata | 1 | | 9.95 | |

**Claims**

1. A process for producing humic acids by coal oxidation effected in the dry phase with oxygen or an oxygen-nitrogen mixture, particularly air, in a fluidized bed reactor using coal of up to 3 mm particle size and operating at a temperature of between 150 and 300°C at a partial oxygen feed pressure of between 0.7 and 5 ata, at a total pressure not exceeding 40 ata and for a contact time of between 30

4

and 600 minutes, characterised by recycling part of the exit gases from the reactor back to the reactor after cooling them to a temperature of between 50 and 100°C.

2.   A process as claimed in claim 1, wherein that part of the gases recycled to the reactor is in a quantity of between 50 and 99% of the total exit gas volume.

3.   A process as claimed in claim 2, wherein that part of the gases recycled to the reactor is in a quantity of between 50 and 90 vol%if air is used as the oxidizing agent.

4.   A process as claimed in claim 3, wherein that part of the gases recycled to the reactor is in a quantity of between 70 and 85 vol%if air is used as the oxidizing agent.

5.   A process as claimed in claim 2, wherein that part of the gases recycled to the reactor is in a quantity of between 85 and 99 vol%if oxygen is used as the oxidizing agent.

6.   A process as claimed in claim 1, wherein the oxidation is effected at a total pressure not exceeding 40 ata.

# Fig.1

# Fig.2

EP 0 488 459 A2